# EUROPEAN PATENT SPECIFICATION

(11) **EP 2 423 170 B1**
(45) Date of publication and mention of the grant of the patent: **21.08.2013**
(21) Application number: 11007623.9
(22) Date of filing: 21.06.2000
(51) Int. Cl.: C03B 37/012

(54) **Method for manufacturing a glass optical fiber preform**
Verfahren zur Herstellung einer Vorform aus Glas für optische Fasern
Procédé de fabrication d'une préforme en verre pour fibre optique

(30) Priority: 22.06.1999 JP 17495499; 05.07.1999 JP 19051799
(43) Date of publication of application: 29.02.2012
(62) Divisional of application: 00940791.7
(73) Proprietor: Mitsubishi Cable Industries, Ltd., Chiyoda-ku Tokyo 100-8303 (JP); Shin-Etsu Quartz Products Co., Ltd., Tokyo 160-0023 (JP)
(72) Inventor: Ito, Hideaki, Hyogo 6600856 (JP); Kon, Masataka, Tokyo 1008303 (JP); Kinoshita, Takaharu, Hyogo 6600856 (JP); Nagae, Nobusada, Tokyo 1008303 (JP)
(74) Representative: Laufhütte, Dieter

(56) References cited:
- EP-A1- 0 244 135
- WO-A1-97/30944
- JP-A- 8 277 138
- US-A- 4 578 096

## Description

### TECHNICAL FIELD

The present invention relates to a method for manufacturing an optical fiber preform, in which a glass rod for the core, or a glass rod for the core and the cladding, is inserted into a glass pipe for the cladding, the pressure inside the glass pipe is reduced while the glass rod and glass pipe are heated, and the glass pipe and the glass rod are formed into a single unit and are elongated.

### BACFCGROUND ART

Three methods can be offered as the principle methods for manufacturing optical fiber preforms: OVD (Outside Vapor Deposition), VAD (Vapor-phase Axial Deposition) and MCVD (Modified Chemical Vapor Deposition). From the standpoint of productivity, in VAD and MCVD methods the cladding, which comes to occupy a major portion of the optical fiber preform, is formed around the outer circumference of the glass rod by a separate process after the glass rod for the core or for the core and the cladding has been manufactured.

More specifically, a so-called external adhering method is known as a method for forming the cladding, wherein, for example, fine glass particles called "soot" are deposited on the glass rod and are heated to make transparent glass.

In contrast, JP S56-45867B, for example, discloses a so-called rod-in-tube method, wherein a glass rod for the core or for the core and the cladding is inserted into a glass pipe for the cladding, which has been manufactured beforehand in a separate process, and the glass pipe and glass rod are formed into a single unit. More specifically,

for this rod-in-tube method, a method is known wherein the glass pipe and glass rod are heated by a burner flame so as to press the glass pipe onto the glass rod by the gas of this burner flame, thereby forming the glass pipe and glass rod into a single unit. Moreover, in a different known rod-in-tube method, the pressure within the glass pipe is reduced while the glass pipe and the glass rod are heated by a heating furnace (heater), for example, so as to form the glass pipe and the glass rod into a single unit by the pressure difference between the inside and the outside of the glass pipe.

Optical fiber preforms manufactured by the above manufacturing methods are made into optical fiber by performing a fiber-drawing process, and JP S50-85345A, for example, discloses a method for conducting a fiber-drawing process at the same time that the optical fiber preform is manufactured by a rod-in-tube method.

Another example is given in EP 0 244 135 A1 where a method and an apparatus are provided for overcladding a preform rod. The preform rod is aligned with and inserted into an overcladding tube. The outer diameter of the preform rod and the inner diameter of the tube are such that the clearance between the tube and the rod does not exceed a predetermined value. Successive increments of length of the tube and rod therein are subjected to a controlled zone of heat while the pressure inside the tube is maintained at a value which is substantially less than that outside the tube. This causes the tube to be collapsed onto the preform rod to provide an overclad preform which is substantially concentric with respect to the optical fiber core.

In recent years, from the standpoint of reducing production costs, for example, in order to meet demands for optical fiber preform of an increased size, optical fiber preforms have been given a large diameter. When an optical fiber preform with a large diameter is drawn into a fiber as is, however, a long period of time is required before it can be stabilized into an optical fiber of a target diameter, and a large amount of preform is consumed.

In light of the above, before an optical fiber preform with a large diameter is drawn into fiber, a diameter reducing process is normally performed to reduce its diameter to the optimal diameter for producing the greatest yield. For example, JP H07-10580A discloses a method for manufacturing an optical fiber preform using the above-mentioned rod-in-tube method and simultaneously reduceing the diameter of that optical fiber preform, so as to improve productivity.

However, when an optical fiber preform is manufactured by forming the glass pipe and a glass rod into a single unit, bubbles or the like may form between the glass pipe and the glass rod. These bubbles increase the transmittance loss and cause the difficulties of uniform connection of the optical fiber, and therefore bubbles must be reliably prevented during the manufacturing of optical fiber preforms. The following first and second problems are related to the prevention of these bubbles.

A first problem relates to the pressure inside of the glass pipe when the glass pipe and the glass rod are formed into a single unit.

That is, one reason why the above-mentioned bubbles occur is because of defects in the inner wall of the glass pipe, and also because of moisture and gas that adheres to the inner wall of the glass pipe. Therefore, to prevent bubbles due to defects, for example, in the inner wall of the glass pipe, the glass rod is normally inserted into the glass pipe after the inner wall of the glass pipe has been thoroughly cleaned and moisture, for example, has been completely removed. Furthermore, to prevent the remaining of gas that has adhered to the inner wall of the glass pipe, when the glass pipe and the glass rod are to be formed into a single unit, the pressure in the glass pipe is set to an extremely low pressure (pressure reduction level is raised), and then the glass pipe and the glass rod are formed into a single unit.

However, if the pressure reduction level within the glass pipe is raised for the purpose of preventing bubbles, then the glass pipe attempts to suddenly reduce its diameter, so that the curvature in the reduced portions becomes large, and the amount of thickness aberration increases. This results in the problem of core eccentricity becoming larger when the glass pipe and the glass rod have been formed into a single unit. Core eccentricity easily becomes particularly large when a large-scale glass pipe, for example a thick-walled glass pipe with a small inner to outer diameter ratio, or a glass pipe with a large outer diameter, is used for the purpose of manufacturing a large optical fiber preform. In order to prevent core eccentricity, it is effective to form the glass pipe and the glass rod into a single unit in a state in which the level of pressure reduction within the glass pipe has been lowered, but if the level of pressure reduction is lowered, there is the risk that bubbles will form within the optical fiber preform as mentioned above.

Thus, the first problem when forming the glass pipe and the glass rod into a single unit to manufacture an optical fiber preform is the conflicting demands for the prevention of bubbles from forming due to defects in the inner wall of the glass pipe, and the prevention of core eccentricity. This first problem is extremely difficult to solve, particularly when manufacturing large-scale optical fiber preforms.

Next, a second problem relates to the gap (clearance) between the glass pipe and the glass rod.

When forming the glass pipe and the glass rod into a single unit to manufacture the optical fiber preform, the glass pipe and the glass rod can be easier formed into a single unit and the core eccentricity when forming the glass pipe and the glass rod into a single unit is smaller if the clearance is small.

However, if the clearance is made small, the glass rod and the glass pipe rub against one another when the glass rod is inserted into the glass pipe, and defects occur in the inner wall of the glass pipe and the outer wall of the glass rod due to this rubbing. This results in the risk that bubbles, for example, may form between the glass pipe and the glass rod. In particular, when a long optical fiber preform is manufactured, a long glass rod is inserted into a long glass pipe, and therefore it becomes extremely difficult to keep the glass rod and the glass pipe from rubbing against one another.

In view of the above, it would seem that the clearance between the glass pipe and the glass rod could be made larger when the glass pipe and the glass rod are formed into a single unit and elongated. Specifically, the following four methods are conceivable.

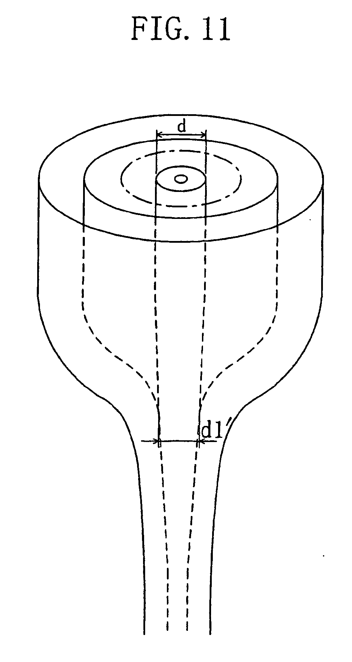

A first method, as shown in Fig. 11, increases the clearance between the glass pipe and the glass rod by using a glass pipe which has the same outer diameter as a conventional glass pipe, and only the inner diameter is larger. The dash-dotted line in Fig. 11 shows the inner diameter of a conventional glass pipe. With this first method, there is the problem that although rubbing between the glass pipe and the glass rod is avoided, the cross section area of the glass pipe becomes small, and the area of the cladding portion is insufficient when the glass pipe and the glass rod are formed into a single unit. That is, the core/cladding ratio (value of the cladding diameter divided by the core diameter, hereinafter abbreviated as C/C) of the optical fiber preform must be a predetermined value, and the cross section area of the glass pipe must correspond to the cross section area of the core in the glass rod. With the first method, to set the C/C of the completed optical fiber preform to a predetermined value, the glass pipe having an insufficient amount of cross section area must be provided with additional coats, and therefore it is necessary to carry out glass pipe coating two or more times. For this reason, there is the problem that together with an increase in production costs, the increase in the number of coats raises the risk that bubbles will form in the interface of the additionally coated glass pipe, and therefore the preform will become defective.

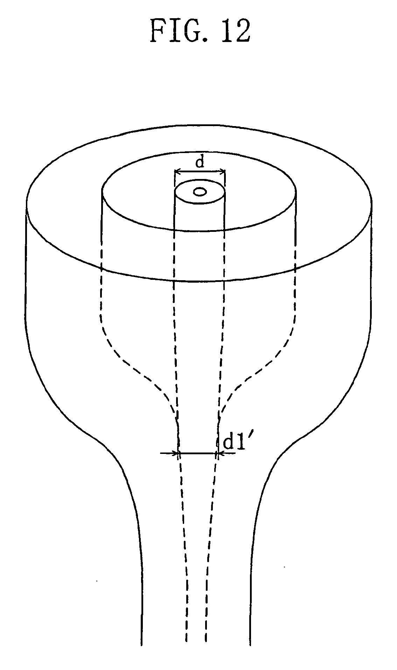

In a second method, as shown in Fig. 12, the clearance between the glass pipe and the glass rod is increased by using a glass pipe which has the same cross section area as a conventional glass pipe, but has a larger inner and outer diameter. With this second method, although rubbing between the glass pipe and the glass rod is avoided, the diameter of the glass pipe must be significantly reduced until the inner diameter of the glass pipe becomes the outer diameter of the glass rod. For this reason, there is the risk that the glass pipe will not uniformly reduce its diameter, thus increasing the amount of core eccentricity in the optical fiber preform. Moreover, because the cross section area of the glass pipe is the same as that of a conventional glass pipe, the outer diameter increases in proportion to the amount that the inner diameter is increased. In particular, when manufacturing optical fibers in which the cladding is large with respect to the core, such as single mode optical fibers, it is necessary to use a glass pipe that has a large cross section area, and thus the glass pipe comes to have an even larger outer diameter. In this case, in addition to the occurrence of the above-mentioned problems, there is the problem that large glass pipes are difficult to obtain and expensive, and because the glass pipe has a large outer diameter, there is also the problem that manufacturing equipment such as the heating furnace must also be large, thereby resulting in increased equipment costs and operating costs.

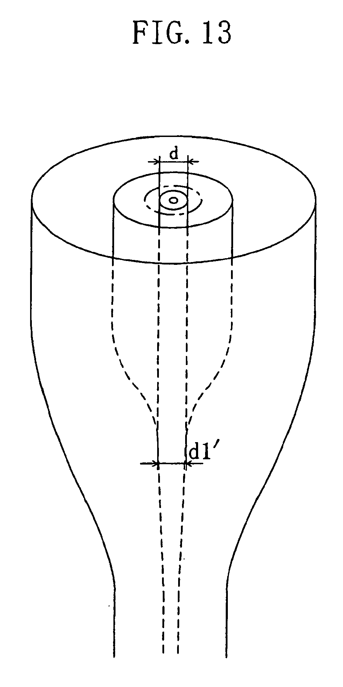

In a third method, as shown in Fig. **13**, the clearance between the glass pipe and the glass rod is increased by elongating the glass rod to reduce its diameter, rather than increase the inner diameter of the glass pipe. The dash-dotted line in Fig. **13** indicates the outer diameter of a conventional glass rod. Also in this third method, although rubbing between the glass pipe and the glass rod is avoided, the cross section area of the glass pipe becomes too large with respect to the cross section area of the core in the glass rod, and it becomes difficult to set the C/C of the completed optical fiber preform to a predetermined value. That is, the cross section area of the core in the glass rod becomes smaller by elongating the glass rod, and thus the required cross section area of the glass pipe also becomes smaller. However, because the glass pipe has the same cross section area as a conventional glass pipe, if the glass pipe and the glass rod are formed into a single unit and are elongated, the C/C of the completed optical fiber preform significantly exceeds the predetermined value. In order to set the C/C of this optical fiber preform to the predetermined value it would seem that unnecessary portions on the glass pipe could be removed by flame polishing, for example, but if portions of the glass pipe are removed, the optical fiber preform is reduced in size. Moreover, by requiring a heretofore unnecessary flame polishing step, the number of production steps is increased, thereby leading to an increase in production costs. Note that if a glass pipe is used that has a cross section area corresponding to the diameter of the elongated glass rod, an optical fiber preform with the predetermined C/C can be obtained, but there is the problem that in this case the optical fiber preform is reduced in size and productivity is lowered.

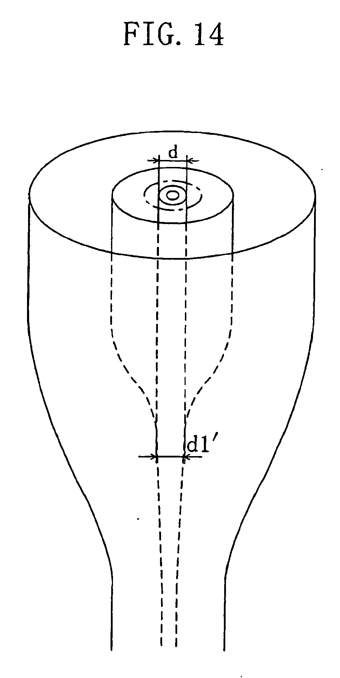

A fourth method is conceivable particularly for the manufacturing of optical fiber preforms for a single mode optical fiber, and as shown in Fig. **14**, this method secures clearance between the glass pipe and the glass rod not by elongating the glass rod, but rather by removing the cladding portion of the glass rod to reduce its outer diameter while maintaining the diameter of the core. Also with this fourth method, rubbing between the glass pipe and the glass rod can be avoided, but the losses in the optical fiber that is drawn out from the completed optical fiber perform are high. That is, there may be residual OH groups, which absorb the signal light that propagates through the optical fiber core, at the interface between the glass rod and the glass pipe in the optical fiber preform. In consideration of the above, normally the outer diameter of the glass rod is made large so as to provide distance between the interface of the glass rod and the glass pipe, and the core, and thus, even if there are residual OH groups at the interface of the glass rod and the glass pipe, the optical fiber is not easily affected by the effects of signal light absorption by these OH groups. For example, when manufacturing an optical fiber preform for a 1.3 µm band single mode optical fiber, the outer diameter of the glass rod must be approximately 3.6 times (C/C 3.6) or more than the outer diameter of the core in the glass rod, and normally the glass rod which is used has a C/C of approximately 4. However, when the cladding portion of the glass rod is removed as in this fourth method, the above-mentioned interface becomes closer to the core, and there are higher losses in the optical fiber due to the absorption of signal light by residual OH groups at the interface.

Thus, a second problem when forming a glass pipe and a glass rod into a single unit to manufacture an optical fiber preform is that even if the above-mentioned first through fourth methods are used to give an increased clearance and prevent the formation of bubbles, the result is an increase in the amount of core eccentricity and a drop in productivity, among other problems, and it becomes extremely difficult to prevent these problems as well.

An object of the present invention is to prevent the formation of bubbles during the manufacturing of optical fiber preforms in which a glass pipe and a glass rod are formed into a single unit and elongated, and in particular, it is an object of the present invention to solve the first and second problems related to preventing the formation of bubbles.

### DISCLOSURE OF THE INVENTION

First, to solve the above-mentioned first problem, the inventors repeatedly performed experiments focusing on aspects such as the pressure reduction level in the glass pipe, the heating temperature, and the feed rate of the glass pipe and the glass rod into the heating furnace. The result was the finding of conditions for manufacturing an optical fiber preform wherein both the formation of bubbles and core eccentricity could be reliably prevented.

That is, it was found that when the glass pipe and the glass rod are formed into a single unit and are elongated, it is particularly important that the pressure reduction level in the glass pipe is optimized to prevent both the formation of bubbles and core eccentricity. In light of this, the inventors repeatedly performed experiments with a focus on this pressure reduction level, and from those results found the pressure reduction level in the glass pipe at which core eccentricity does not occur and the formation of bubbles can be reliably prevented, or in other words, found the optimal pressure reduction level. Then, when the glass pipe and the glass rod were formed into a single unit and elongated using this optimal pressure reduction level, it was found that either the glass pipe or the glass rod, or both, were elongated before forming into a single unit, and then the glass rod and the glass pipe formed into a single unit. For example, when the pressure reduction level is too high, the glass pipe and the glass rod are elongated after they have formed into a single unit, in which case it becomes easy for core eccentricity to occur, as mentioned above. On the other hand, when the pressure reduction level is too low, the glass pipe and the glass rod are not formed into a single unit, and after they have both been sufficiently elongated they tend to form into a single unit, but in this case they are not completely formed into a single unit. In contrast, at an optimal pressure reduction level, the glass pipe and the glass rod are formed into a single unit after the glass pipe or the glass rod, or both, have been elongated. Moreover, it was confirmed that both the formation of bubbles and core eccentricity are reliably prevented when the glass pipe and the glass rod are formed into a single unit after the glass pipe or the glass rod, or both, have been elongated. Furthermore, it was confirmed that both the formation of bubbles and core eccentricity are reliably prevented even when a glass pipe with a large diameter or a glass pipe with a thick wall is used.

More specifically, a glass rod for the core or a glass rod for the core and the cladding is inserted into a glass pipe for the cladding, the pressure in the glass pipe is reduced while the glass pipe and the glass rod are heated, and the glass pipe and the glass rod are formed into a single unit and are elongated.

Then, the glass pipe and the glass rod are formed into a single unit after the glass pipe or the glass rod, or both, has been elongated, after which the glass pipe and glass rod that have been formed into a single unit are elongated until the outer diameter of the glass pipe becomes a predetermined diameter.

Here, the value of the optimal pressure reduction level depends on the temperature conditions of the heating furnace that heats the glass pipe and the glass rod, and the shape of the glass pipe and the glass rod, for example the size of the gap between the glass pipe and the glass rod. For that reason, it is difficult to regulate all optimal manufacturing conditions with the pressure reduction level. In light of this problem, the inventors found that optical manufacturing conditions can be set if the distance with respect to the longitudinal direction of the glass pipe and the glass rod is utilized, instead of regulating the above-mentioned pressure reduction level.

More specifically, when the length from the position at which the glass pipe or the glass rod, or both, begin to be elongated to the position at which the glass pipe and the glass rod are formed into a single unit is L1, and the length from the position at which the glass pipe and the glass rod are formed into a single unit to the position at which the glass pipe and the glass rod are elongated so that the outer diameter of the glass pipe becomes a predetermined diameter is L2, then the glass pipe and the glass rod are formed into a single unit and are elongated so as to satisfy the equation 0.1 ≦ L1/(L1+L2) ≦ 0.8.

Furthermore, the inventors found that the amount of core eccentricity also depends on the size of the clearance. For example, when there is a large clearance, the curvature of the glass pipe increases when the glass pipe diameter is reduced by shrinking, and thus core eccentricity easily occurs. Then, the optimal manufacturing conditions obtained by regulating the clearance were found.

More specifically, when the outer diameter of the glass pipe is ***D0*** and the inner diameter of the glass pipe is *d0,* the outer diameter of the glass pipe is *D1* and the inner diameter of the glass pipe is *d1* at the position where the glass pipe and the glass rod become a single unit, then the glass pipe and the glass rod are formed into a single unit and elongated so as to satisfy the equation *(d0*/*DO)l(d1lD1)* ≦ 2.

For example, when the value of (d0/D0)/(d1/D1) is large, that is, when there is a large clearance, there is the risk that the curvature of the reduced glass pipe diameter will increase and cause core eccentricity, however, core eccentricity can be reliably prevented by setting the value of (*d0*/*D0)*/*(d1*/*D1)* to 2 or less, as above-mentioned.

The method for manufacturing an optical fiber preform is also suited for the manufacturing of large-scale optical fiber preform, so that it becomes possible to manufacture an optical fiber preform while preventing the formation of bubbles and core eccentricity even when, for example, a thick-walled glass pipe with an inner to outer diameter ratio of 0.5 or less is used, or a glass pipe with a large outer diameter of 48 mm or more is used.

On the other hand, to solve the above-mentioned second problem, the inventors secured the clearance between the glass pipe and the glass rod not by making the inner diameter of the glass pipe large, but rather by focusing on and improving the diameter reduction by elongating the glass rod. That is, when the glass rod is elongated as in the aforementioned third method, problems occur due to the reduction in diameter of the core in the glass rod. However, if the feed rate of the elongated glass rod when it is feed into the heating furnace is faster than the feed rate of the glass pipe, then the cross section area of the glass rod at the position at which the glass pipe and the glass rod are formed into a single unit becomes larger than when the feed rate of the glass rod and the feed rate of the glass pipe are the same. Thus, in light of this point the invention was achieved.

More specifically, the invention is for a method for manufacturing an optical fiber preform, wherein a glass rod for a core or a glass rod for the core and a cladding is inserted into a glass pipe for the cladding, the pressure in the glass pipe is reduced while the glass pipe and the glass rod are heated by a heating furnace, and the glass pipe and the glass rod are both formed into a single unit and elongated.

Then, the feed rate at which the glass rod is fed into the heating furnace is adjusted such that it is faster than the feed rate of the glass pipe and not more than twice the feed rate of the glass pipe.

Here, the glass rod can have been reduced in diameter by elongating, for example, that is to say, it can be a glass rod that has been reduced in diameter without its C/C being altered.

According to the invention, by making the feed rate of the glass rod larger than the feed rate of the glass pipe, the cross section area of the glass rod when the glass rod and the glass pipe are formed into a single unit is larger than when the feed rate of the glass rod and the feed rate of the glass pipe are the same. That is, when the feed rate of the glass rod and the feed rate of the glass pipe are the same, the ratio of the cross section area of the glass rod to the cross section area of the glass pipe is always kept constant, but by making the feed rate of the glass rod faster than the feed rate of the glass pipe, the ratio of the cross section area of the glass rod to the cross section area of the glass pipe changes, and thus the glass pipe and the glass rod are formed into a single unit in a state wherein the cross section area of the glass rod has increased relative to the cross section area of the glass pipe. Consequently, by increasing the ratio of the cross section area of the glass pipe to the cross section area of the glass rod, the effects of core diameter reduction due to the elongating of the glass rod are canceled, and the C/C of the optical fiber preform obtained by forming the glass pipe and the glass rod into a single unit becomes the target C/C.

The feed rate of the glass rod is set to not more than twice the feed rate of the glass pipe for the following reason. For example, if the feed rate of the glass rod is too much faster than the feed rate of the glass pipe, then the glass rod becomes several times the length of the glass pipe. Also, when the glass pipe and the long glass rod that is inserted into the glass pipe are fed into the heating furnace, it is necessary that the equipment for drawing the optical fiber preform is of an extremely large size. Because of the resulting difficulty in achieving all of the above, the feed rate of the glass rod should be not more than twice the feed rate of the glass pipe.

The method for manufacturing an optical fiber preform according to the invention is particularly effective when an elongated glass rod that whose diameter is small in comparison to the cross section area of the glass pipe is used so that the gap between the glass pipe and the glass rod becomes large, and the feed rate of the glass rod is adjusted so that when the glass pipe and the glass rod become a single unit, the set core/cladding ratio is achieved.

In this case, the clearance becomes relatively large by setting the glass rod to a small diameter, even if the inner diameter of the glass pipe is not large. For this reason, rubbing between the glass pipe and the glass rod is avoided, and the formation of bubbles is prevented. An optical fiber preform with the target C/C can be manufactured as mentioned above by increasing the feed rate of the glass rod, even if the glass rod has a small diameter. Furthermore, because the inner diameter of the glass pipe is not large, the diameter of the glass pipe is uniformly reduced and thus core eccentricity is avoided. Moreover, a large heating furnace is unnecessary, and the cross section area of the glass pipe does not have to be small to correspond to the reduced diameter of the glass rod, and thus large optical fiber preforms can be manufactured.

If the ratio (V_{R}/V_{P}) of the feed rate of the glass pipe Vp to the feed rate of the glass rod V_{R} is set to 1 < (V_{R}/V_{P}) ≦ 2, then, for example, when a large-sized and long optical fiber preform with a clearance set to about 5 to 15 mm is manufactured using a glass rod with an outer diameter of about 25 to 45 mm, and a glass pipe with an inner diameter of about 50 to 55 mm, problems such as the formation of bubbles and core eccentricity can be reliably avoided.

However, what becomes a particular problem in the manufacturing of a large-sized and long optical fiber preform is when the core diameter, the refractive index difference between the core and the cladding, or the C/C change in the longitudinal direction of the glass rod that is used in the manufacturing of this optical fiber preform and which has been manufactured by VAD, for example. If such a glass rod in which the structure has changed in the longitudinal direction is formed into a single unit with the glass pipe at the same feed rate as the glass pipe to make optical fiber preform, then the C/C of this optical fiber preform reflects the structural changes in the longitudinal direction of the glass rod and changes in the longitudinal direction.

For this reason, normally the glass rod is partitioned in longitudinal direction into a plurality of glass rods, a target C/C suited to the structure of each of the partitioned glass rods is set and the manufacturing process is adjusted at each of the partitioned glass rods, so that the cut-off wavelength in the optical fiber has the desired value. For example, large sections of the core diameter in the glass rods are cut away and the cut glass rods are elongated, and the portions in the glass rods in which there is a large difference in refractive index between the core and the cladding are cut away, and then the glass rods are set to a target C/C that is higher than normal and the glass rods and the glass pipe are formed into a single unit.

However, partitioning the glass rod into a plurality of glass rods and individually adjusting the manufacturing process for each of the partitioned glass rods causes problems such as a drop in yield and the complication of managing the manufacturing process.

A preferred embodiment of the invention solves these problems. More specifically, it is characterized by adjusting the feed rate of the glass rod so as to form the glass pipe and the glass rod into a single unit at a desired core/cladding ratio in the longitudinal direction.

Here, what is meant by "form the glass pipe and the glass rod into a single unit at a desired core/cladding ratio in the longitudinal direction" is that even if irregularities in the core diameter, the refractive index difference between the core and the cladding, or the C/C occur in longitudinal direction in the glass rod, these irregularities are canceled so that the glass pipe and the glass rod can be formed into a single unit to make an optical fiber preform with the target C/C.

According to this embodiment, an optical fiber preform with a desired C/C can be obtained even if in the glass rod the core diameter, the refractive index difference between the core and the cladding, or the C/C change in the longitudinal direction. For example, if the glass rod has a refractive index difference between the core and the cladding that is substantially constant in the longitudinal direction but the C/C increases from the end at which glass rod and glass pipe integration begins toward the end at which integration finishes, then an optical fiber preform with a desired C/C in the longitudinal direction is manufactured if the feed rate of this glass rod is gradually increased while it is formed into a single unit with the glass pipe. Or, if the glass rod has a C/C that is substantially constant in the longitudinal direction but the refractive index difference between the core and the cladding increases from the end at which glass rod and glass pipe integration begins toward the end at which integration finishes, then an optical fiber preform with a desired C/C in the longitudinal direction is manufactured if the feed rate of this glass rod is gradually reduced while it is formed into a single unit with the glass pipe. Or, if in the glass rod, both the refractive index difference between the core and the cladding and the C/C increase from the end at which glass rod and glass pipe integration begins toward the end at which integration finishes, then an optical fiber preform with a desired C/C in the longitudinal direction is manufactured if the target C/C is set at tiny increments in the longitudinal direction of this glass rod, and the feed rate of the glass rod is increased and decreased based on the set target C/C ratios as the glass rod and the glass pipe are formed into a single unit.

Optical fiber drawn from large optical fiber preforms processed in this way has a stable cut-off wavelength in the longitudinal direction. Furthermore, the manufacturing of optical fiber at an improved process yield and low cost is achieved.

The feed rate of the glass rod can be controlled by a executing a control program, for example, in which the amount of change in the core diameter, refractive index difference between the core and the cladding, or the C/C, in the longitudinal direction of the glass rod is measured or estimated before the glass rod and the glass pipe become a single unit, and then the program is configured based on this amount of change. Furthermore, when the refractive index difference between the core and the cladding in the glass rod is substantially constant in the longitudinal direction, a feedback control can be performed in which the feed rate of the glass rod is controlled according to values obtained by measuring the core diameter while the glass rod and the glass pipe are being formed into a single unit.

It should be noted that the same operation and effects as mentioned above can also be obtained by adjusting the feed rate of the glass pipe.

The glass rod and the glass pipe are normally formed into a single unit once any bend deformations in their shape have been corrected, but particularly in the case of manufacturing large-sized and long optical fiber preforms, it becomes difficult to correct bends in the glass rod and the glass pipe, because the glass rod and the glass pipe are large. On the other hand, if they are formed into a single unit without correcting these bends, then there is the risk that the amount of core eccentricity in the optical fiber preform will increase.

Another embodiment of the invention solves this problem. More specifically, it is characterized in that the glass pipe and the glass rod are formed into a single unit while the glass pipe or the glass rod, or both, are rotated around the longitudinal axis of the glass pipe or glass rod.

When the glass rod or the glass pipe, or both, are rotated around the longitudinal center axis while they are being formed into a single unit, then the amount of core eccentricity decreases because the axial symmetry with respect to the longitudinal center axis in the optical fiber preform is improved. From the fact that polarization diffraction properties improve if the amount of core eccentricity is decreased it is possible to obtain a more precise optical fiber, and a large optical fiber preform can be manufactured.

### BRIEF DESCRIPTION OF THE DRAWINGS

Fig. 1 is a perspective view illustrating how an optical fiber preform is manufactured.
Fig. 2 is a perspective view showing how the glass pipe and the glass rod being are formed into a single unit by the method for manufacturing an optical fiber preform according to the first embodiment.
Fig. 3 is a diagram that corresponds to Fig. 2 and shows how the glass pipe and the glass rod are formed into a single unit by a conventional method for manufacturing an optical fiber preform.
Fig. **4** shows the experimental results of an evaluation of the bubbles inside an optical fiber preform, and the amount of measured core eccentricity in the optical fiber drawn out from an optical fiber preform, when manufacturing the optical fiber preforms at various L1/(L1+L2) values.
Fig. **5** shows the experimental results of an evaluation of the bubbles inside an optical fiber preform, and the amount of measured core eccentricity in the optical fiber drawn out from an optical fiber preform, when manufacturing optical fiber preforms at various (d0/D0)/(d1/D1) values.
Fig. **6** is a diagram that corresponds to Fig. 2 and shows how the glass pipe and the glass rod are formed into a single unit when there is a small clearance.
Fig. **7** is a diagram that corresponds to Fig. 2 and shows how the glass pipe and the glass rod are formed into a single unit when there is a large clearance.
Fig. **8** is a diagram showing the amount of core eccentricity and the number of formed bubbles as a function of *L1*/*(L1+L2),* as obtained by experiment.
Fig. **9** is a diagram showing the amount of core eccentricity as a function of (*dO*/*D0*)/(*d1*/*D1*)*,* as obtained by experiment.
Fig. **10** is a diagram that corresponds to Fig. 2 and shows how the glass pipe and the glass rod are formed into a single unit by the method for manufacturing an optical fiber preform according to the second embodiment.
Fig. 11 is a diagram corresponding to Fig. 2 and shows how the glass pipe and the glass rod how formed into a single unit when a glass pipe having a large inner diameter is used.
Fig. **12** is a diagram corresponding to Fig. 2 and shows how the glass pipe and the glass rod are formed into a single unit when a glass pipe having a large inner and outer diameter is used.
Fig. **13** is a diagram corresponding to Fig. 2 and shows how the glass pipe and the glass rod are formed into a single unit when a glass rod having an outer diameter that has been reduced by elongating is used.
Fig. **14** is a diagram corresponding to Fig. 2 and shows how the glass pipe and the glass rod are formed into a single unit when the glass rod that is used has an outer diameter that has been reduced by removing the cladding portion.
Fig. **15** is a diagram corresponding to Fig. 2 and shows how the glass pipe and the glass rod are formed into a single unit when there is a small clearance.
Fig. **16** shows the experimental results of an evaluation of the bubbles inside an optical fiber preform, and the amount of measured core eccentricity in the optical fiber drawn out from an optical fiber preform, in a case wherein optical fiber preforms were manufactured at various clearances and glass rod feed rates.

### First Embodiment

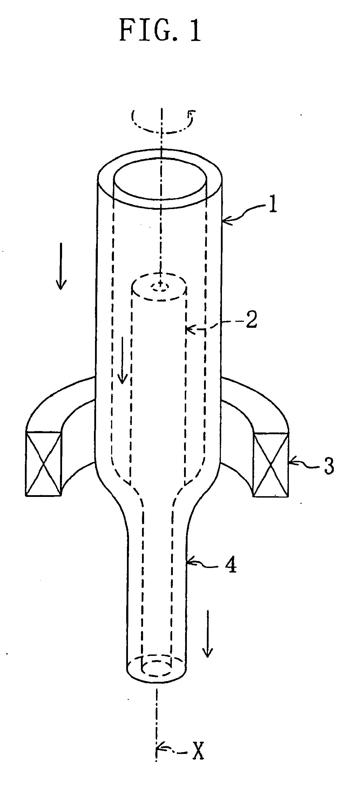

Fig. 1 illustrates the state during the manufacturing of an optical fiber preform according to the first embodiment. Numeral 1 denotes a glass pipe for the cladding, numeral 2 denotes a glass rod for the core or for the core and the cladding, and numeral 3 denotes a heater for heating both the glass pipe 1 and the glass rod 2. For the glass pipe 1, it is possible to use a glass pipe that has been manufactured by OVD, for example. Furthermore, the glass rod 2 can be a glass rod made by sintering a deposit of fine glass particles that have been deposited by the VAD method, or a glass rod made by forming and solidifying core glass on the inner wall of a cladding pipe by MCVD. Furthermore, for the furnace provided with the heater 3, more specifically a carbon resistance furnace or a high-frequency induction furnace can be used.

The manufacturing procedure of the optical fiber preform is explained next. First, in a state wherein the upper ends of the glass pipe 1 and the glass rod 2 are held by a holding device, which has been omitted from the drawings, the glass rod 2 is inserted into the glass pipe 1 such that it is coaxial with the glass pipe 1. Then, while the pressure inside the glass pipe 1 is reduced by a pressure reducing device, which has been omitted from the drawings, the glass pipe 1 and the glass rod 2 are moved downward by the holding device such that they are positioned within the heater 3 (see arrows in Fig. 1).

The glass pipe 1 and the glass rod 2 are heated by the heater 3, and once the glass pipe 1 has melted, the difference in pressure inside and outside the glass pipe 1 causes the glass pipe 1 and the glass rod 2 to become a single unit. Formed into a single unit, the optical fiber preform 4 is drawn by a drawing device (omitted from the drawings) provided below the heater, and is elongated downwards (see arrows in Fig. 1), and thus the glass pipe 1 and the glass rod 2 are formed into a single unit at the same time that the optical fiber preform 4 is elongated.

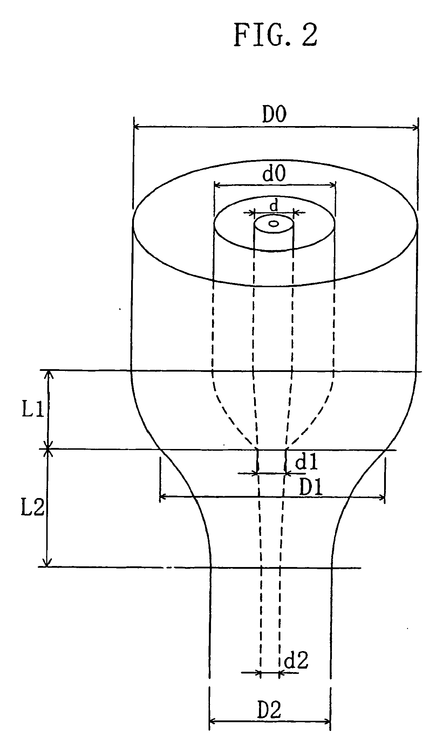

In the first embodiment, as shown in Fig. 2, by adjusting the level of pressure reduction within the glass pipe 1, the glass rod 2 is pre-elongated before the glass pipe 1 and the glass rod 2 are formed into a single unit, and then the glass pipe 1 and the glass rod 2 are formed into a single unit. This means that the glass rod 2 begins to elongate at a position that is above the position at which the glass pipe 1 and the glass rod 2 become a single unit (see L1 in Fig. 2). Note that L2 in the drawing shows the length between the position at which the glass pipe 1 and the glass rod 2 become a single unit, and the position at which the outer diameter of the glass pipe 1 becomes a predetermined diameter D2 due to the elongating of the glass pipe 1 and the glass rod 2 which have been formed into one unit.

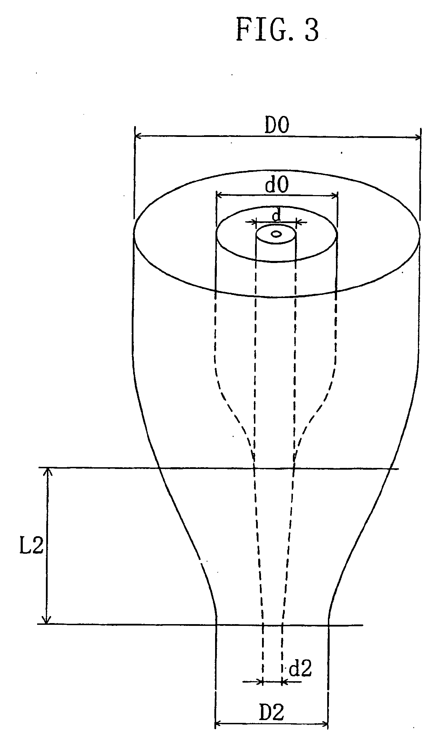

On the other hand, Fig. 3 shows how the glass pipe 1 and the glass rod 2 are formed into one unit in accordance with a conventional optical fiber manufacturing method. In this case, the glass pipe 1 and the glass rod 2 become a single unit with neither of them being elongated, and the optical fiber preform 4 is elongated only after they have been formed into one unit, and therefore there is no L1.

The following is a description of an experiment that was conducted with method for manufacturing an optical fiber preform according to the first embodiment.

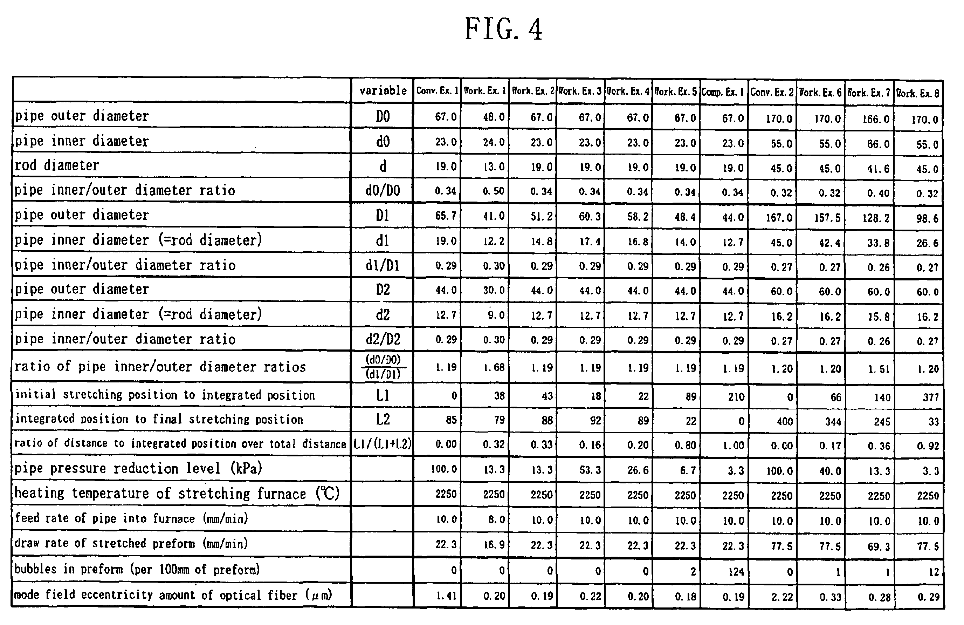

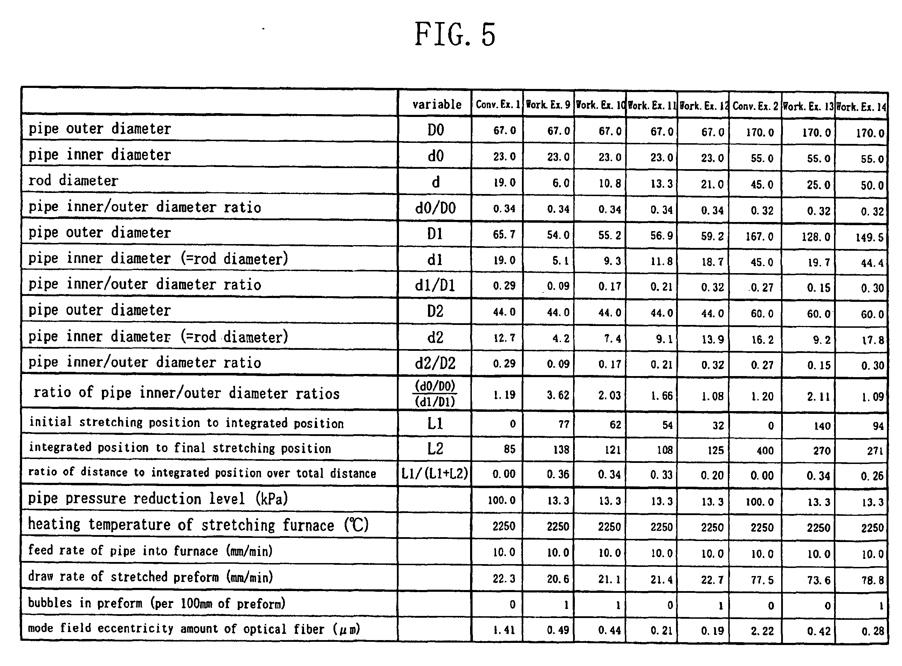

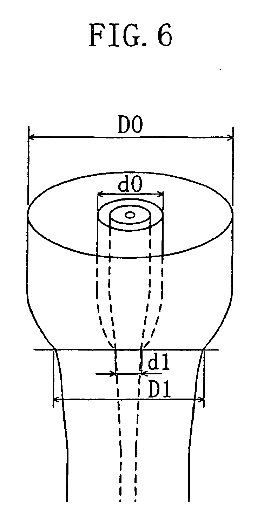

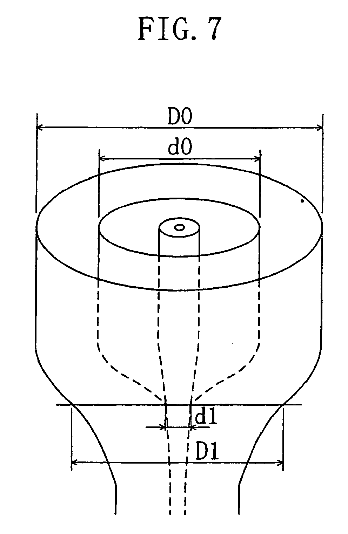

Fig. 4 shows the experimental results of an evaluation regarding bubbles formed in the optical fiber preform 4, and the amount of core eccentricity in the optical fiber drawn out from the optical fiber preform 4, when the optical fiber preform 4 was manufactured using various glass pipes 1 and glass rods 2, and the value of L1/(L1+L2) as the parameter was changed by altering the pressure reduction level within the glass pipe 1. Fig. 5 shows the experimental results of an evaluation regarding bubbles formed in the optical fiber preform 4, and the amount of core eccentricity in the optical fiber, when the optical fiber preform 4 was manufactured using various glass pipes 1 and glass rods 2, when the gap (clearance: *(d0*/*D0)* / (d1/D1)) between the glass pipe 1 and the glass rod 2 is small (see Fig. 6), and when the clearance is large (see Fig. 7).

Here, *D0* and *d0* are the outer diameter and inner diameter of the glass pipe 1 before elongating, D1 and d1 are the outer diameter and inner diameter of the glass pipe 1 at the position of integration, and D2 and d2 are the outer diameter (optical fiber preform diameter) and inner diameter of the glass pipe 1 when the elongating operation is finished. Furthermore, d is the outer diameter of the glass rod 2 before elongating.

Working Examples 1 to 8 in Fig. 4 are examples in which the optical fiber preform 4 was manufactured by adjusting the level of pressure reduction within the glass pipe 1 so as to pre-elongate the glass rod 2 before the glass pipe 1 and the glass rod 2 are formed into a single unit (see Fig. 2), and of Working Examples 1 to 8, in Working Examples 1 to 5, the glass pipe 1 has a relatively small outer diameter *D0*, whereas in Working Examples 6 to 8, the glass pipe 1 has a relatively large outer diameter D0.

Furthermore, Working Examples 9 to 14 in Fig. 5 are examples in which the optical fiber preform 4 was manufactured by adjusting the pressure reduction levels within the glass pipe 1 so as to pre-elongate the glass rod 2 before the glass pipe 1 and the glass rod 2 are formed into a single unit, and of Working Examples 9 to 14, in Working Examples 9 to 12, the outer diameter **D0** of the glass pipe 1 is relatively small, whereas in Working Examples 13 and 14, the outer diameter D0 of the glass pipe 1 is relatively large.

On the other hand, in Conventional Examples 1 and 2, neither the glass pipe 1 nor the glass rod 2 are pre-elongated before they are formed into a single unit, and the optical fiber preform 4 is manufactured by elongating the glass pipe 1 and the glass rod 2 only after they have become a single unit (see Fig. 3). In Conventional Example 1, the outer diameter *D0* of the glass pipe 1 is relatively small, whereas in Conventional Example 2, the outer diameter D0 of the glass pipe 1 is relatively large.

Moreover, in Comparative Example 1 in Fig. 4, the level of pressure reduction in the glass pipe 1 is small, and the glass pipe 1 and the glass rod 2 were not completely formed into a single unit (L2=0).

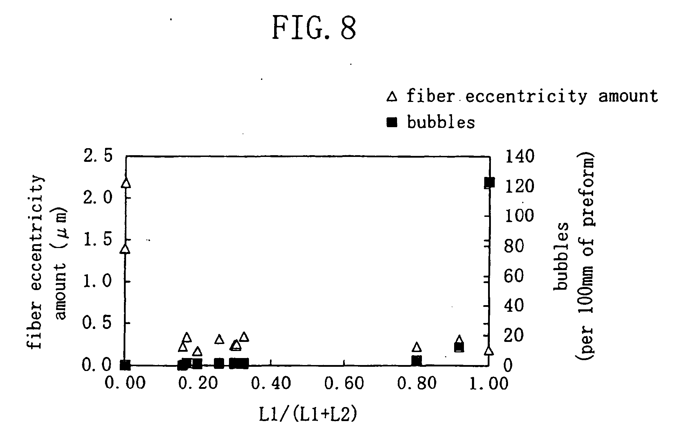

Fig. 8 is a diagram based on Fig. 4 and Fig. 5, in which the value of *L1*/*(L1+L2)* is plotted along the horizontal axis, and the number of bubbles formed in the optical fiber preform (black squares) and the amount of core eccentricity of the optical fiber (white triangles) are plotted along the vertical axis. From Fig. 8, it can be seen that if the value of *L1*/*(L1+L2)* is at least 0.1 and not more than 0.8, then the formation of bubbles and core eccentricity are both prevented. This trend is the same even when the outer diameter D0 of the glass pipe 1 is large, as in Working Examples 6 and 7, for example, and it was found that the formation of bubbles and core eccentricity were reliably prevented even when the glass pipe 1 had a large diameter (large D0) or was thick walled (small *d0*/*D0).*

From the above results, it was possible to confirm that the optical fiber preform 4 can be manufactured under the prevention of bubbles and eccentricity by elongating the glass pipe 1 and the glass rod 2 and forming them into a single unit such that 0.1 ≦ *L1*/*(L1+L2)* ≦ 0.8.

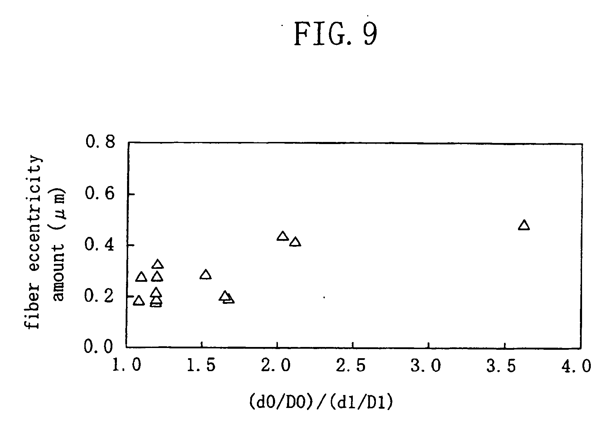

Fig. 9 is also a diagram based on Fig. 4 and Fig. 5, in which the value of (*d0*/*D0*)/(*d1*/*D1*) is plotted on the horizontal axis, and the amount of core eccentricity is plotted on the vertical axis. From Fig. 9, it was found that core eccentricity is prevented if the value of *(d0*/*D0)*/*(d1*/*D1)* is not larger than 2, that is, when there is a relatively small clearance.

From the above results, it was possible to confirm that the optical fiber preform 4 can be manufactured under prevention of core eccentricity by forming the glass pipe 1 and the glass rod 2 into one unit and elongating them such that *(d0*/*D0)*/*(d1*/*D1)* ≦ 2.

It should be noted that with the method for manufacturing an optical fiber preform according to the first embodiment, the same effects can also be obtained if the glass pipe 1 and the glass rod 2 are elongated upward, opposite from the illustration in Fig. 1.

### Second Embodiment

The second embodiment corresponds to the invention. The basic configuration of the method for manufacturing an optical fiber preform according to the second embodiment is substantially the same as that of the first embodiment (see Fig. 1), and thus only different aspects will be explained.

The grasping device, which has been omitted from the drawings, grasps the upper ends of the glass pipe 1 and the glass pipe 2 and is configured such that it can move the glass pipe 1 and the glass rod 2 in a downward direction, but the moving directions can be set to feed rates for the glass pipe 1 and the glass rod 2 (feeding speed toward the heater 3) that differ from one another.

Furthermore, the holding device is configured such that it is able to rotate the glass rod 2 around the axis X in the longitudinal direction of the glass rod 2, and when necessary, to form the glass pipe 1 and the glass rod 2 into a single unit while rotating the glass rod 2.

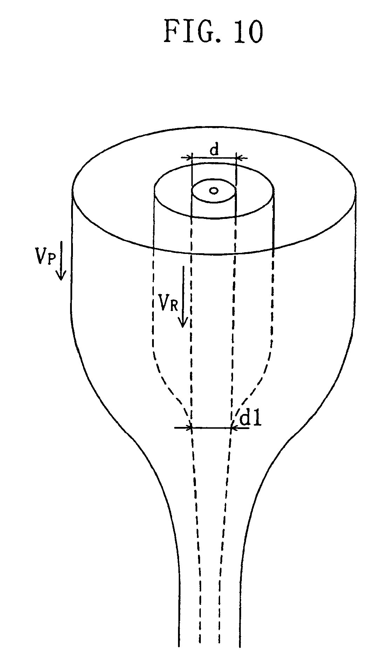

The following describes the manufacturing of the above optical fiber preform 4. The glass rod 2 that is used in the second embodiment has been elongated to relatively small diameter (see d of Fig. 10), and on the other hand, the glass pipe 1 is a conventional glass pipe. Thus, the gap (clearance) between the glass rod 2 and the glass pipe 1 is relatively large.

Then, in a state wherein the glass rod 2 has been inserted into the glass pipe 1, the glass pipe 1 and the glass rod 2 are moved downwards while the pressure inside the glass pipe 1 is reduced by the pressure reducing device, and at this time the feed rate V_{R} of the glass rod 2 is set so that it is faster than the feed rate Vp of the glass pipe 1. Thus, the outer diameter of the glass rod 2 at the position where the glass rod 2 is formed into a single unit with the glass pipe 1 becomes the outer diameter *d1* of the glass rod 2 that is necessary to achieve the set C/C for the optical fiber preform 4. As a result, the target C/C is attained for the integrally formed optical fiber preform 4.

When for example the C/C of the glass rod 2 changes along the longitudinal direction of the glass rod 2, then the feed rate V_{R} of the glass rod 2 is adjusted by a pre-set control program so that the C/C of the optical fiber preform 4 becomes the predetermined C/C.

Thus, if the clearance is made relatively large by setting the outer diameter of the glass rod 2 to a small diameter, rubbing between the glass pipe 1 and the glass rod 2 can be avoided to prevent the formation of bubbles. Moreover, by increasing the feed rate V_{R} of the glass rod 2, the amount of the glass rod 2 that is fed per unit of time does not drop, even if the glass rod 2 has a small outer diameter. Therefore, even if the glass pipe 1 does not have a small cross section area, an optical fiber preform 4 with a predetermined C/C can be manufactured, and a large optical fiber preform 4 can be manufactured. A glass pipe of the same size as a conventional glass pipe can be used for the glass pipe 1, and thus there are no cost increases related for example to changing the size of the glass pipe 1, and moreover, the heating furnace does not have to be changed to a large heating furnace. Furthermore, because the glass pipe 1 does not have large inner or outer diameters, the glass pipe 1 uniformly reduces its diameter when the glass pipe 1 and the glass rod 2 become a single unit. Thus, eccentricity of the core can be avoided.

Furthermore, adjusting the feed rate V_{R} of the glass rod by increasing or decreasing it, an optical fiber preform having a desired C/C can be manufactured even if the core diameter, the C/C, or the refractive index difference between the core and the cladding in the glass rod 2 change in the longitudinal direction.

Furthermore, when necessary, the glass rod 2 can be formed into a single unit with the glass pipe 1 while it is rotated around its longitudinal central axis X to improve axial symmetry in the optical fiber 4 with respect to the longitudinal central axis X, and thus the amount of core eccentricity of the optical fiber preform 4 can be reduced.

It should be noted that it is also possible to perform a feedback control on the feed rate V_{R} of the glass rod 2 so as to control the feed rate V_{R} based on a measurement of the core diameter of the optical fiber 4 made while the glass pipe 1 and the glass rod 2 are formed into a single unit, for example.

It is also possible to adjust the feed rate of the glass pipe 1 instead of adjusting the feed rate V_{R} of the glass rod 2. Also in this case, the same results and effects as above can be achieved.

Furthermore, the glass pipe 1 can be rotated around the longitudinal central axis X instead of rotating the glass pipe 2 around its longitudinal central axis X. This, too, improves the axial symmetry with respect to the longitudinal central axis X of the optical fiber preform 4, and decreases the amount of core eccentricity of the optical fiber preform 4. It is also possible to rotate both the glass pipe 1 and the glass rod 2.

With the method for manufacturing an optical fiber preform according to this second embodiment, the same effects can be obtained even if the glass pipe 1 and the glass rod 2 are elongated upwards.

The following is a description of an experiment performed using the method for manufacturing an optical fiber preform according to the second embodiment.

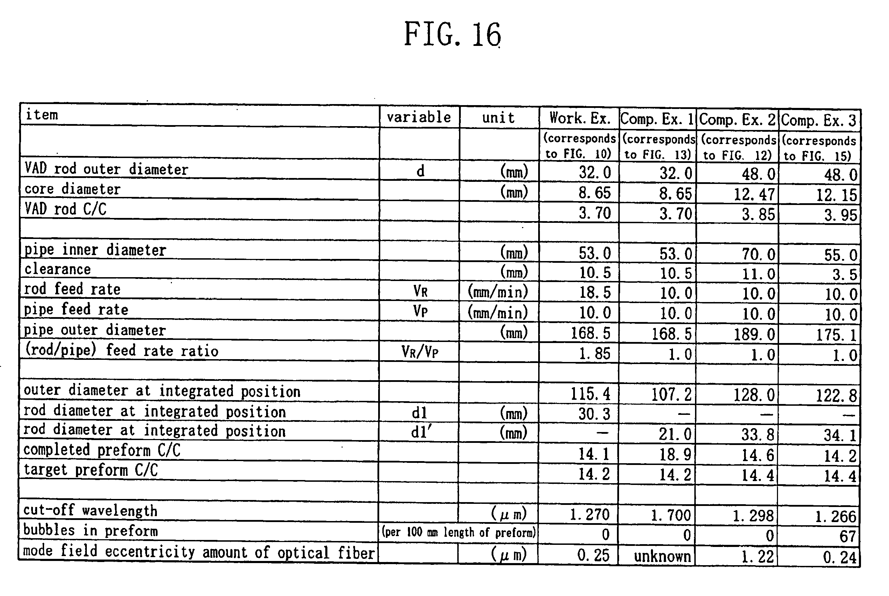

Fig. 16 illustrates the results of an experiment performed to evaluate the formation of bubbles in the optical fiber preform, and the amount of core eccentricity measured after the optical fiber preform is drawn into optical fiber, when the optical fiber preform is manufactured using a variety of glass pipes 1 and glass rods 2, and changing the size of the clearance and the feed rate V_{R} of the glass rod 2 as parameters.

Here, d is the diameter of the glass rod 2 before it is elongated, and *d1* and d1' are the outer diameter of the glass rod 2 (inner diameter of the glass pipe 1) at the spot where the glass pipe 1 and the glass rod 2 are formed into a single unit. Further, V_{R} is the feed rate of the glass rod 2, and V_{P} is the feed rate of the glass pipe 1.

Furthermore, in the Working Example and Comparative Examples 1 and 2 of Fig. 16, as shown in Fig. 10, Fig. 13, and Fig. 12, there is a relatively large clearance, and therefore the optical fiber preform is manufactured without the glass pipe 1 and the glass rod 2 rubbing against each other. In the Working Example, the optical fiber preform was manufactured by feeding the glass rod 2 at a faster feed rate (V_{R}/V_{P} > 1) than the glass pipe 1.

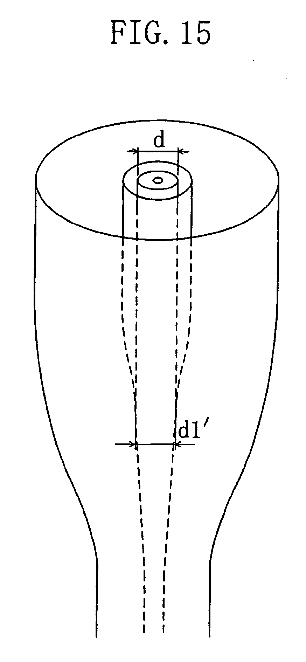

On the other hand, in Comparative Example 3, as shown in Fig. 15, there is a small clearance, and therefore the glass pipe 1 and the glass rod 2 rub against each other during the manufacturing of the optical fiber preform.

From Fig. 16, it was found that in Comparative Examples 1 and 2, in which there is a large clearance, the formation of bubbles resulting from rubbing between the glass pipe 1 and the glass rod 2 is prevented, however, either the cut-off wavelength significantly differs from its target value (Comparative Example 1), or there is an increase in the amount of core eccentricity (Comparative Example 2). Moreover, it was found that in the Comparative Example 3, in which there is a small clearance, bubbles form as a result of rubbing between the glass pipe 1 and the glass rod 2.

In contrast, in the Working Example, in which there was a large clearance and the feed rate V_{R} of the glass rod 2 was faster than the feed rate of the glass pipe 1, both the formation of bubbles and core eccentricity were prevented, and moreover, the cut-off wavelength of the obtained optical fiber was the value of the target cut-off wavelength.

From the above results, it was possible to confirm that with the method for manufacturing an optical fiber preform according to the second embodiment, it is possible to manufacture a large optical fiber preform in which the formation of bubbles and core eccentricity are reliably prevented, and from which an optical fiber with the target cut-off wavelength can be obtained.

## Claims

1. A method for manufacturing an optical fiber preform (4), wherein a glass rod (2) for a core or a glass rod (2) for the core and a cladding is inserted into a glass pipe (1) for the cladding, the pressure in the glass pipe (1) is reduced while the glass pipe (1) and the glass rod (2) are heated by a heating furnace (3), and the glass pipe (1) and the glass rod (2) are formed into a single unit and are elongated, the method for manufacturing an optical fiber preform **characterised by**:
adjusting the feed rate at which the glass rod (2) is fed into the heating furnace (3) such that it is faster than the feed rate of the glass pipe (1) and not more than twice the feed rate of the glass pipe (1).

2. The method for manufacturing an optical fiber preform (4) according to claim 1,
wherein the elongated glass rod (2) that is used has a smaller diameter in comparison to the cross section area of the glass pipe (1), so as to make the gap between the glass pipe (1) and the glass rod (2) large, and
wherein the feed rate of the glass rod (2) is adjusted such that a set core/cladding ratio is achieved when the glass pipe (1) and the glass rod (2) are formed into a single unit.

3. The method for manufacturing an optical fiber preform (4) according to claim 1 or claim 2,
wherein the feed rate of the glass rod (2) is adjusted such that the glass pipe (1) and the glass rod (2) are formed into a single unit at a desired core/cladding ratio in the longitudinal direction.

4. The method for manufacturing an optical fiber preform (4) according to claim 1 or claim 2,
wherein the glass pipe (1) and the glass rod (2) are formed into a single unit while the glass pipe (1) or the glass rod (2), or both, are rotated around the longitudinal axis of the glass pipe (1) or glass rod (2).

## Patentansprüche

1. Verfahren zum Herstellen einer Glasfaser-Preform (4), wobei ein Glasstab (2) für einen Kern oder ein Glasstab (2) für den Kern und eine Ummantelung in ein Glasrohr (1) für die Ummantelung eingebracht wird, der Druck in dem Glasrohr (1) reduziert wird, während das Glasrohr (1) und der Glasstab (2) von einem Wärmeofen (3) erhitzt werden, und das Glasrohr (1) und der Glasstab (2) zu einer einzigen Einheit ausgebildet und gestreckt werden, wobei das Verfahren zum Herstellen einer Glasfaser-Preform **gekennzeichnet ist durch**:
Anpassen der Förderrate, bei der der Glasstab (2) in den Wärmeofen (3) befördert wird, so dass sie schneller als die Förderrate des Glasrohrs (1) und nicht mehr als doppelt so groß wie die Förderrate des Glasrohrs (1) ist.

2. Verfahren zum Herstellen einer Glasfaser-Preform (4) nach Anspruch 1,
wobei der längliche Glasstab (2), der verwendet wird, verglichen mit der Querschnittfläche des Glasrohrs (1) einen kleineren Durchmesser hat, um den Spalt zwischen dem Glasrohr (1) und dem Glasstab (2) groß zu machen, und
wobei die Förderrate des Glasstabs (2) so angepasst wird, dass ein festgelegtes Kern-/Ummantelungsverhältnis erreicht wird, wenn das Glasrohr (1) und der Glasstab (2) zu einer einzigen Einheit ausgebildet werden.

3. Verfahren zum Herstellen einer Glasfaser-Preform (4) nach Anspruch 1 oder 2,
wobei die Förderrate des Glasstabs (2) so angepasst wird, dass das Glasrohr (1) und der Glasstab (2) in der Längsrichtung bei einem erwünschten Kern-/Ummantelungsverhältnis zu einer einzigen Einheit ausgebildet werden.

4. Verfahren zum Herstellen einer Glasfaser-Preform (4) nach Anspruch 1 oder 2, wobei das Glasrohr (1) und der Glasstab (2) zu einer einzigen Einheit ausgebildet werden, während das Glasrohr (1) oder der Glasstab (2) oder beide um die Längsachse des Glasrohrs (1) oder des Glasstabs (2) gedreht werden.

## Revendications

1. Méthode de fabrication d'une préforme de fibre optique (4) dans laquelle une tige en verre (2) destinée à un noyau ou une tige en verre (2) destinée au noyau et à un placage par soudage sont insérées dans un tube en verre (1) destiné au placage par soudage, la pression dans le tube en verre (1) est réduite tandis que le tube en verre (1) et la tige en verre (2) sont chauffés par un four chauffant (3), et que le tube en verre (1) et la tige en verre (2) sont façonnés en une seule unité et sont allongés, la méthode de fabrication d'une préforme de fibre optique étant **caractérisée par** :
l'ajustement de la vitesse d'introduction à laquelle la tige en verre (2) est introduite dans le four chauffant (3) de sorte qu'elle est plus rapide que la vitesse d'introduction du tube en verre (1) ou pas plus que le double de la vitesse d'introduction du tube en verre (1).

2. Méthode de fabrication d'une préforme de fibre optique (4) selon la revendication 1,
dans laquelle la tige en verre (2) allongée qui est utilisée possède un plus petit diamètre en comparaison à la zone de section croisée du tube en verre (1) afin d'élargir l'écart entre le tube en verre (1) et la tige en verre (2), et
dans laquelle la vitesse d'introduction de la tige en verre (2) est ajustée de sorte qu'un taux de placage/noyau est obtenu lorsque le tube en verre (1) et la tige en verre (2) sont façonnés en une seule unité.

3. Méthode de fabrication d'une préforme de fibre optique (4) selon la revendication 1 ou la revendication 2,
dans laquelle la vitesse d'introduction de la tige en verre (2) est ajustée de sorte que le tube en verre (1) et la tige en verre (2) sont façonnés en une seule unité à un taux de placage/noyau désiré dans le sens longitudinal.

4. Méthode de fabrication d'une préforme de fibre optique (4) selon la revendication 1 ou la revendication 2,
dans laquelle le tube en verre (1) et la tige en verre (2) sont façonnés en une seule unité tandis que le tube en verre (1) ou la tige en verre (2), ou les deux, sont mis en rotation autour de l'axe longitudinal du tube en verre (1) ou de la tige en verre (2).
